(19) Europäisches Patentamt
European Patent Office
Office européen des brevets

(11) **EP 4 366 204 A1**

(12) **EUROPEAN PATENT APPLICATION**

(43) Date of publication:
**08.05.2024 Bulletin 2024/19**

(21) Application number: **23198113.5**

(22) Date of filing: **19.09.2023**

(51) International Patent Classification (IPC):
**H04L 1/08** (2006.01)    **H04W 74/0833** (2024.01)

(52) Cooperative Patent Classification (CPC):
**H04L 1/08; H04W 74/0833**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.11.2022 FI 20225989**

(71) Applicant: **Nokia Technologies Oy**
**02610 Espoo (FI)**

(72) Inventors:
• **MARCONE, Alessio**
**81541 Munich (DE)**

• **MASO, Marco**
**92130 Issy les Moulineaux (FR)**
• **NHAN, Nhat-Quang**
**51100 Reims (FR)**
• **AHMADIAN TEHRANI, Amir Mehdi**
**81245 Munich (DE)**
• **AHMADZADEH, Arman**
**80807 Munich (DE)**

(74) Representative: **Nokia EPO representatives**
**Nokia Technologies Oy**
**Karakaari 7**
**02610 Espoo (FI)**

(54) **RANDOM ACCESS PROCEDURE**

(57)    In accordance with an example embodiment of the present disclosure there is provided an apparatus including means for determining an RO sequence for transmission of a first message with repetitions, wherein the first message is part of a random access procedure; means for transmitting the first message with repetitions over the determined RO sequence; means for generating RA-RNTI based on the determined RO sequence; and means for using the generated RA-RNTI in the random access procedure.

Fig. 3

**Description**

## TECHNICAL FIELD

Various example embodiments relate to random access procedure of a mobile network.

## BACKGROUND

This section illustrates useful background information without admission of any technique described herein representative of the state of the art.

Random access procedure is used in mobile networks for initiating data transfer.

Present disclosure relates to development of random access procedure and more specifically to random access messages with repetitions.

## SUMMARY

The scope of protection sought for various embodiments of present disclosure is set out by the independent claims. The embodiments and features, if any, described in this specification that do not fall under the scope of the independent claims are to be interpreted as examples useful for understanding various example embodiments.

According to a first example aspect of the present disclosure, there is provided an apparatus comprising

means for determining an RO sequence for transmission of a first message with repetitions, wherein the first message is part of a random access procedure;
means for transmitting the first message with repetitions over the determined RO sequence;
means for generating RA-RNTI based on the determined RO sequence; and
means for using the generated RA-RNTI in the random access procedure.

In some example embodiments alone or in combination with other embodiments of different aspects of present disclosure, using the generated RA-RNTI in the apparatus of the first example aspect comprises detecting downlink control information with cyclic redundancy check scrambled by the generated RA-RNTI.

In some example embodiments alone or in combination with other embodiments of different aspects of present disclosure, the apparatus of the first example aspect is, or is comprised in user equipment.

According to a second example aspect of the present disclosure, there is provided an apparatus comprising

means for detecting transmission of a first message with repetitions over an RO sequence, wherein the first message is part of a random access procedure;
means for generating RA-RNTI based on the detected RO sequence; and
means for using the generated RA-RNTI in the random access procedure.

In some example embodiments alone or in combination with other embodiments of different aspects of present disclosure, using the generated RA-RNTI in the apparatus of the second example aspect comprises scrambling a cyclic redundancy check of downlink control information by the generated RA-RNTI; and transmitting the downlink control information.

In some example embodiments alone or in combination with other embodiments of different aspects of present disclosure, the apparatus of the second example aspect is, or is comprised in a network element. The network element may be for example a gNB. The network element may be a physical device or a virtualized network function comprising one or more virtual machines (VMs) that are for instance running on a virtualization platform comprising one or more virtualization servers.

In some example embodiments alone or in combination with other embodiments of different aspects of present disclosure, the generation of the RA-RNTI is configured to use an identifier of the RO sequence.

In some example embodiments alone or in combination with other embodiments of different aspects of present disclosure, the generation of the RA-RNTI is configured to use a time domain parameter t_id as an identifier of the RO sequence.

In some example embodiments alone or in combination with other embodiments of different aspects of present disclosure, the generation of the RA-RNTI is configured to use identification information of the ROs belonging to the RO sequence.

In some example embodiments alone or in combination with other embodiments of different aspects of present disclosure, the generation of the RA-RNTI is configured to use identification information of one or more unique ROs belonging to the RO sequence.

In some example embodiments alone or in combination with other embodiments of different aspects of present disclosure, the generation of the RA-RNTI is configured to use identification information of at least one of the following: the first RO of the RO sequence and the last RO of the RO sequence.

In some example embodiments alone or in combination with other embodiments of different aspects of present disclosure, the identification information comprises time domain identifier of respective RO.

In some example embodiments alone or in combination with other embodiments of different aspects of present disclosure, the identification information comprises frequency domain identifier of respective RO.

In some example embodiments alone or in combination with other embodiments of different aspects of present disclosure, the generation of the RA-RNTI is configured to use sum of the identification information.

In some example embodiments alone or in combination with other embodiments of different aspects of present disclosure, the generation of the RA-RNTI is configured to use sum modulo N of the identification information.

In some example embodiments alone or in combination with other embodiments of different aspects of present disclosure, the random access procedure is contention based random access, CBRA.

According to a third example aspect of the present disclosure, there is provided a method, comprising:

determining an RO sequence for transmission of a first message with repetitions, wherein the first message is part of a random access procedure;
transmitting the first message with repetitions over the determined RO sequence;
generating RA-RNTI based on the determined RO sequence; and
using the generated RA-RNTI in the random access procedure

According to a fourth example aspect of the present disclosure, there is provided a method, comprising:

detecting transmission of a first message with repetitions over an RO sequence, wherein the first message is part of a random access procedure;
generating RA-RNTI based on the detected RO sequence; and
using the generated RA-RNTI in the random access procedure.

According to a fifth example aspect of the present disclosure, there is provided computer executable program instructions configured to cause performing at least the following:

determining an RO sequence for transmission of a first message with repetitions, wherein the first message is part of a random access procedure;
transmitting the first message with repetitions over the determined RO sequence;
generating RA-RNTI based on the determined RO sequence; and
using the generated RA-RNTI in the random access procedure

According to a sixth example aspect of the present disclosure, there is provided computer executable program instructions configured to cause performing at least the following:

detecting transmission of a first message with repetitions over an RO sequence, wherein the first message is part of a random access procedure;
generating RA-RNTI based on the detected RO sequence; and
using the generated RA-RNTI in the random access procedure.

The computer program of the fifth and/or the sixth example aspect may be stored in a non-transitory computer readable memory medium.

Any foregoing memory medium may comprise a digital data storage such as a data disc or diskette, optical storage, magnetic storage, holographic storage, opto-magnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device.

According to a seventh example aspect of the present invention, there is provided an apparatus comprising at least one processor and at least one memory storing instructions that, when executed by the processor, cause the apparatus to perform

determining an RO sequence for transmission of a first message with repetitions, wherein the first message is part of a random access procedure;

transmitting the first message with repetitions over the determined RO sequence;

generating RA-RNTI based on the determined RO sequence; and

using the generated RA-RNTI in the random access procedure

According to an eighth example aspect of the present invention, there is provided an apparatus comprising at least one processor and at least one memory storing instructions that, when executed by the processor, cause the apparatus to perform

detecting transmission of a first message with repetitions over an RO sequence, wherein the first message is part of a random access procedure;

generating RA-RNTI based on the detected RO sequence; and

using the generated RA-RNTI in the random access procedure.

Different non-binding example aspects and embodiments of the present invention have been illustrated in the foregoing. The embodiments in the foregoing are used merely to explain selected aspects or steps that may be utilized in implementations of the embodiment of the present disclosure. Some embodiments may be presented only with reference to certain example aspects. It should be appreciated that corresponding embodiments may apply to other example aspects as well.

## BRIEF DESCRIPTION OF THE DRAWINGS

For a more complete understanding of example embodiments of the present invention, reference is now made to the following descriptions taken in connection with the accompanying drawings in which:

Fig. 1 shows a signaling diagram of a 4-step RACH procedure of 5G NR;

Fig. 2 is a graph presentation of some examples of RO sequences;

Fig. 3 shows a flow chart of a process of an example embodiment;

Fig. 4 lists alternatives of some example embodiments; and

Fig. 5 shows a block diagram of an apparatus of an example embodiment.

## DETAILED DESCRIPTON OF THE DRAWINGS

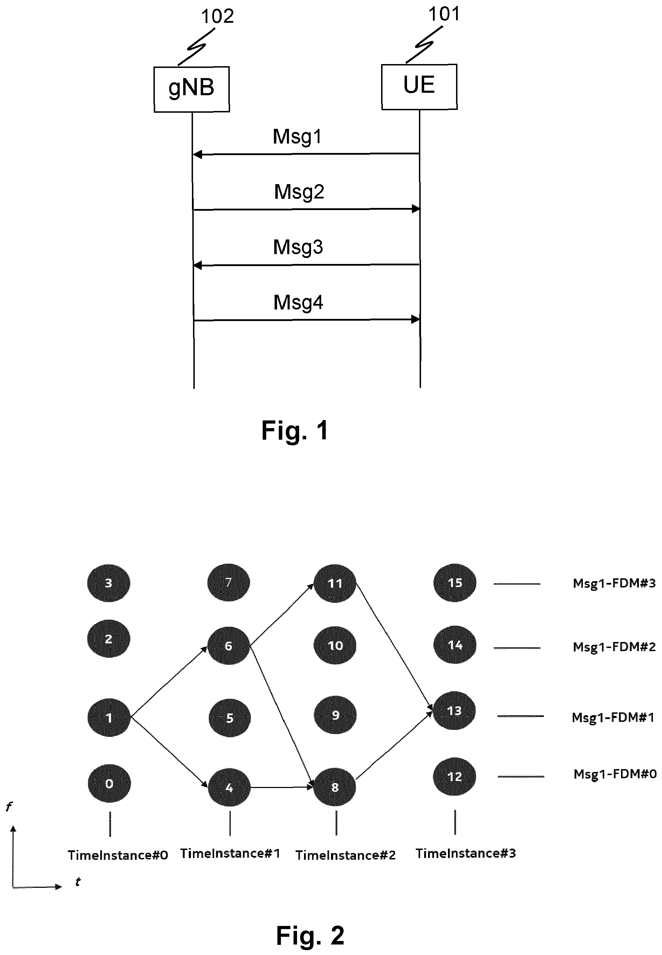

An example embodiment of the present disclosure and its potential advantages are understood by referring to Figs. 1 through 5 of the drawings. In this document, like reference signs denote like parts or steps.

In the following, various example embodiments of present disclosure are discussed in detail in the context of 5G NR technology. It is however to be noted that various example embodiments of present disclosure may be equally applied to other mobile networks and radio communication technologies (e.g. future technologies, such as 6G technology or any subsequently developed technology) in addition to 5G NR.

In 5G NR, two contention based random access (CBRA) procedures are supported, namely 4-step random access channel (RACH) (Rel-15) and 2-step RACH (Rel-16). Present disclosure focuses on the 4-step RACH for illustration purpose and simplicity, but various example embodiments of present disclosure are equally applicable to the 2-step RACH.

Fig. 1 shows a signaling diagram of the 4-step RACH procedure of 5G NR. Fig. 1 shows a user equipment (UE) 101 and NR Node B (gNB) 102. The messages of the 4-step RACH procedure as shown in Fig. 1 can be summarized as follows:

- First message Msg1 (a.k.a PRACH): The UE 101 sends a specific preamble to the gNB 102 via physical random access channel (PRACH) using a specific resource called RACH occasion (RO).
- Second message Msg2 (a.k.a. RAR): The gNB 102 replies with a random access response (RAR) message, which includes a detected preamble ID (RAPID), a time-advance command, a Temporary Cell Radio Network Temporary Identifier (TC-RNTI), and UL grant for the transmission of a third message Msg3 on physical uplink shared channel (PUSCH).
- Third message Msg3 (a.k.a. RRC request): The UE 101 responds to Msg2 over the scheduled PUSCH with an ID for contention resolution.
- Fourth message Msg4 (a.k.a. RRC setup): The gNB 102 transmits the contention resolution message with the contention-resolution ID.

Upon reception of Msg4, the UE 101 sends an ACK on a PUCCH if its contention-resolution ID is carried by Msg4. This completes the 4-step RACH. It is worth noting that prior to Msg1, there is also a preliminary step of sending and receiving the synchronization signal block (SSB), i.e., DL beam sweeping, which is not formally part of the RACH procedure. As a result of this preliminary step, the UE 101 selects the index of the preferred SSB beam and decodes the associated physical broadcast channel (PBCH) for master information block (MIB), system information block (SIB) and so on. This index is also used by UE to identify a suitable RO for the preamble transmission (i.e. Msg1) according to the SSB-to-RO mapping implicitly conveyed by the SIB1.

The 2-step RACH is similar to the 4-step RACH as shown in Fig. 1, except that Msg1 and Msg3 are combined into a MsgA and sent out without waiting for feedback from the network in between (i.e. Msg2 of Fig. 1). Similarly, the gNB combines Msg2 and Msg4 into a MsgB. Various embodiments of present disclosure may be equally applied to Msg1 of Fig. 1 or to the preamble/Msg1 part of MsgA of the 2-step RACH.

A UE attempting access selects one RO out of the one or more ROs associated to the selected SSB beam to perform the Msg1 transmission, i.e., to transmit its preamble. Upon detection of a preamble at the gNB, the combination between preamble ID (RAPID) and RO over which the preamble is transmitted provides gNB two elements which are used by the gNB to both determine that an access attempt is occurring and to design the corresponding response to the preamble detection. The response comes in the form of a Msg2 RAR.

The Msg2 RAR includes the UL grant which schedules the Msg3 transmission and is carried in a PDSCH scheduled by a Downlink Control Information (DCI) with Cyclic Redundancy Check (CRC) scrambled by a bit string called Random Access Radio Network Temporary Identifier (RA-RNTI), which is generated according to Section 5.1.3 of 3GPP specifications TS 38.321 V17.3.0. More precisely, the RA-RNTI value is calculated as a function of the PRACH occasion over which gNB has correctly detected one or more preambles, as follows:

$$\text{(equation 1)} \quad \text{RA-RNTI} = 1 + s\_id + 14 \times t\_id + 14 \times 80 \times f\_id + 14 \times 80 \times 8 \times ul\_carrier\_id$$

where $s\_id$ is the index of the first OFDM symbol of the PRACH occasion ($0 \leq s\_id < 14$), $t\_id$ is the index of the first slot of the PRACH occasion in a system frame ($0 \leq t\_id < 80$), where the subcarrier spacing to determine $t\_id$ is based on the value of $\mu$ specified in clause 5.3.2 in TS 38.211 V17.3.0 for $\mu = \{0, 1, 2, 3\}$, and for $\mu = \{5, 6\}$, $t_jd$ is the index of the 120 kHz slot in a system frame that contains the PRACH occasion ($0 \leq t\_id < 80$), $f\_id$ is the index of the PRACH occasion in the frequency domain ($0 \leq f\_id < 8$), and $ul\_carrier\_id$ is the UL carrier used for Random Access Preamble transmission (0 for NUL carrier, and 1 for SUL carrier).

In other words, the RA-RNTI is an indication for the UE to understand if the content of the Msg2 RAR is of any interest to the UE. If that is the case, the UE looks at the content of the RAR, which in general includes a MAC PDU which in turn carries at least as many subPDUs as the number of correctly detected preambles over the RO associated with the RA-RNTI. Indeed, when gNB scrambles PDCCH CRC with RA-RNTI for scheduling the transmission of PDSCH that carries RAR(s), RA-RNTI can be addressed to multiple UEs, i.e., multiple UEs might decode PDCCH scrambled by the same RA-RNTI. In this context, each subPDUs of the MAC PDU carries the RAPID of the corresponding correctly detected preamble, and the actual RAR content, e.g., the UL grant for Msg3, for the UE(s) who transmitted that preamble over the RO associated with the RA-RNTI.

As defined above, the RA-RNTI is defined per RO in current specifications. The random access procedure may comprise a Msg1 repetition feature to ensure Msg1 transmission. Defining RA-RNTI per RO as in current specification may not be compatible with such Msg1 repetition feature and based on this it has been identified that there is a need to develop further mechanisms for generation of the RA-RNTI for random access procedure that allows transmission of MSg1 with repetitions.

For the sake of completeness, some possible details of the Msg1 repetition feature are discussed in the following. The Msg1 repetition feature comprises that the UE determines an RO sequence for transmission of the Msg1 with repetitions. The RO sequence refers to a set of ROs comprising two or more ROs to be used for the repetitions.

Different mechanisms may be used by the UE to determine the RO sequence for transmission of the Msg1 with repetitions. The UE may for example determine the RO sequence based on some rules (e.g. rules written in the specification). As an example, the RO sequence could be implicitly determined by the UE as the closest N ROs (for N repetitions) among the available ROs in time domain.

In yet another example, the network may define one or more candidate RO sequences for transmission of the Msg1 with repetitions. The UE is then allowed to select an RO sequence among the candidate sequences for transmission of the Msg1 with repetitions. The network may provide UE with a repetition configuration for determining one or more candidate RO sequences for transmission of the Msg1 with repetitions. I.e. the repetition configuration defines one or more candidate RO sequences for UEs of the respective cell to choose from. The UE then uses the selected RO sequence for transmission of the Msg1 with repetitions. Various examples of determining the RO sequence based on repetition configuration from the network are discussed in the following. Nevertheless, it is to be noted that currently claimed solutions are not limited to any specific mechanism of determining the RO sequence. Instead, any available mechanism to determine the RO sequence for transmission of the Msg1 with repetitions may be used in connection with currently claimed solutions.

In general, the repetition configuration groups multiple ROs in different frequency/time instances together to form the one or more candidate RO sequences. The groupings may be provided as relationships between configured ROs via higher-layer parameters *prach-ConfigurationIndex* and *ssb-perRACH-OccasionAndCB-PreamblesPerSSB*.

The candidate RO sequences may be defined to have the following characteristics:

- ROs sharing the same time resources cannot be part of the same sequence.
- ROs in a sequence are ordered according to their index (as per specification), e.g., first in increasing order of frequency resource index, second in increasing order of time resource index and third in increasing order of indices of PRACH slot.
- Sequences may overlap, i.e., the same RO may be part of more than one sequence. An RO that is part of more than one candidate RO sequence corresponds to a node in graph for which multiple incoming and/or outgoing edges exist. This feature provides low collision probability with a minimum number of resources.

Fig. 2 is a graph presentation of some examples of candidate sequences of ROs. Therein each sequence of ROs is represented by a set of nodes connected by directed edges. The nodes are arranged in a matrix, wherein nodes in the same row share the same frequency resource and nodes in the same column share the same time resource. The index of the frequency resource occupied by the nodes increases from bottom-to-top, and the index of the time resource increases from left-to-right.

Three candidate sequences of ROs are shown in Fig. 2:

1. [RO#1 RO#6 RO#11 RO#13]
2. [RO#1 RO#6 RO#8 RO#13]
3. [RO#1 RO#4 RO#8 RO#13]

The UE may determine the RO sequence that is to be used for the transmission of the Msg1 with repetitions using various alternative mechanisms. Some of these are briefly discussed in the following:

- the first RO of the sequence may be selected in a round robin fashion. This may depend on a configuration provided by the network or hard-coded in the specification.
- Any RO but the first RO in the sequence may be selected depending on the RO of the previous Msg1 repetition in the context of the same PRACH transmission.
- Any RO subsequent to the first in the sequence may be selected according to a parameter configured by the network, wherein only ROs linked by an edge (as in Fig. 2) can be part of the same sequence.

For example, in Fig. 2, only RO#6 and RO#4 can be considered as the second RO for an RO sequence that includes RO#1 as the first RO.

Whenever there are more than one ROs available for the next RO in the RO sequence, the UE may choose the next RO in round robin fashion among the available options.

In another example, the UE may determine the RO sequence that is to be used for the transmission of the Msg1 with repetitions by randomly selecting across a set of RO sequences configured by the network.

The following lists examples of repetition configuration provided by the network and how the UE may use the repetition configuration to determine the RO sequence that is to be used for the transmission of the Msg1 with repetitions:

**Alternative 1)** The repetition configuration comprises density parameters for generating one or more random sparse matrices for determining connections from one RO to subsequent ROs of the candidate sequences of ROs.

The UE generates, based on the density parameters, one or more random sparse matrices or vectors that provide the connections from one RO to subsequent configured ROs associated with the same SSB index and within the configured maximum time duration for transmission of the first message with repetitions.

A sparse matrix/vector is a matrix/vector of ones and zeros, with a density of ones (number of ones among the total number of entries) equal to the configured density. To randomize the number of next ROs (e.g., edges in Fig. 2) in a sequence for each RO of the sequence (alt. node in Fig. 2), the sparse matrix/vector shall be randomly generated with a seed that depends at least on the time and frequency resource occupied by the RO(s) under consideration. Additionally, the seed could depend on the SSB index the RO is associated with. A set of one or more cell-specific seeds could also be configured by the network in order for the network to control which ROs are part of which sequence to a larger degree.

As an alternative, in place of the sparse matrix, several sparse vectors can be generated, one per each RO in each sequence, to represent the next RO(s) in the one or more sequences including the considered RO, located in the next time instance. In particular, for each considered RO in a sequence, the number of next ROs in the next time instance is equal to the minimum number of sequences including the considered RO. In the example of Fig. 2, four (4) possible candidate next ROs in the sequence exist for each RO in a given time instance, and thus a random sparse vector of length 4 and configured density needs to be created per each RO in a sequence of ROs. In the example of Fig. 2, RO#1 is configured with a density of 0.5 (2 next ROs in the next time instance, i.e., RO#1 is included in at least 2 sequences) whereas, for example, RO#4 is configured with a density of 0.25 (1 next RO in the next time instance, i.e., RO#4 is included in at least one sequence.

In an example, only one density value is configured for generation of the sparse matrix or vectors. Depending on the total number of sequences network wishes to configure, and on the number of overlaps between them (i.e., the same RO belongs to two or more sequences), the density value will be different and require fewer or more bits for lower and larger maximum number of sequences including the considered RO. Considering the case of a sparse matrix, for instance, and a quantization of the matrix density with steps of 10% (e.g. [10%,20%,...100%]), 10 states need to be represented by the density value, which would require a total of 4 bits for configuring it.

**Alternative 2)** The repetition configuration comprises one or more sparse matrices providing information on whether an RO is part of a candidate sequence of ROs or not.

The repetition configuration is provided in the form of the sparse matrix or vectors providing information on whether an RO is part of a sequence or not. The information is provided, if applicable, for each configured ROs associated to the same SSB index and within the configured maximum time duration for transmission of the first message with repetitions irrespective of whether the RO is actually part of a sequence or not. The interpretation of the configuration is the same as in the alternative 801.

Considering that only half of the matrix is necessary for indicating all the configured sequences, a total of 128 bits is needed for 16 configured ROs associated to the same SSB index and within the configured maximum time duration for transmission of the first message with repetitions (16*16/2).

**Alternative 3)** The repetition configuration comprises one or more combinatorial indicators providing the rank of one or more combinations of ROs out of all the possible combinations of ROs of the candidate sequences of ROs, wherein one combination of ROs indicates one candidate sequence of ROs.

Each sequence of N ROs (for transmission of the first message with N repetitions) out of the K consecutive ROs associated with same SSB beam are ordered according to their index (determined as per specification). The combinatorial indicator provides the rank of one combination out of all the possible combinations of N ROs out K ROs to transmit the first message with N repetitions. One combinatorial indicator indicates one sequence of N ROs in K consecutive ROs using $\left\lceil \log_2 \binom{K}{N} \right\rceil$ bits. If L > 1 sequences are configured by the network, each sequence is indicated independently using the rank of the corresponding combination, and the overall bitwidth of the combinatorial indicator for all sequences is $L \left\lceil \log_2 \binom{K}{N} \right\rceil$ bits.

In the example of Fig. 2, three (3) sequences of 4 nodes/ROs out of 16 nodes/ROs are represented (and thus are configured to the UE). This requires only 33 bits.

**Alternative 4)** The repetition configuration comprises a first binary sequence indicating the first ROs of the candidate sequences of ROs and a second binary sequence indicating groups of ROs where the remaining ROs of the candidate sequences of ROs are located.

K consecutive ROs associated with same SSB beam are ordered according to their index (determined as per specification), and are grouped in $\left\lceil \frac{K}{F} \right\rceil$ groups of at most F consecutive ROs. In this context, F may be the number of ROs in the same time instance, or alternatively a parameter signaled by the network with an additional indicator. Each RO in a group of F consecutive ROs is represented by a binary sequence of $M = \lceil \log_2 F \rceil$ bits. The network indicates at least one RO in the first group of F consecutive ROs by using a first binary sequence of at least M bits. The UE may then determine valid RO sequences by determining the remaining ROs of each sequence of ROs out of the remaining groups of F consecutive ROs. The remaining groups of F consecutive ROs can be back-to-back and subsequent to the first group of F consecutive ROs or the network can additionally indicate a second binary sequence of T ≥ N bits for indicating the remaining groups of F consecutive ROs where the remaining ROs are located. The latter may require the network to indicate the value of T, unless it is hardcoded in specification. In one example embodiment, for each considered RO in the sequence, the next RO(s) in the sequence (located in any subsequent group(s) of F consecutive ROs) is/are associated with binary sequence(s) that differ from the one associated with current RO by only α bits, i.e., Hamming distance = α.

**Alternative 5)** The repetition configuration comprises N*M bits for each configured candidate sequence of ROs, wherein N is the number of ROs in the candidate sequences of ROs and each group of M bits indicate one RO in each group of consecutive ROs.

The network indicates each sequence of N ROs using N*M bits, wherein each group of $M = \lceil \log_2 F \rceil$ bits indicate one RO in each group of F consecutive ROs (which could, for instance, correspond to a node in a column of Fig. 2, assuming that F equals to the number of ROs in a time instance in this example).

The following discusses an example of the alternative 5: In the scenario of Fig. 7, N=4 and $M = \lceil \log_2 F \rceil = 2$. Thus, each sequence of ROs in Fig. 7 is indicated by 4*2 = 8 bits, wherein each group of 2 bits indicate one RO in the sequence of ROs. For instance, the highest, middle and lowest path/sequence of ROs can be represented by [10 01 00 10], [10 01 11 10], and [10 11 11 10], respectively, which requires a bitwidth of 3*8 = 24 bits to be signaled. Additionally, $\lceil \log_2 F \rceil$ bits would be necessary in case the parameter F needs to be configured and signaled by the network.

**Alternative 6)** The candidate sequences of ROs have the first and/or last RO in common and the repetition configuration comprises single indication(s) of the common RO(s) and sequence specific indications of other ROs of the candidate sequences of ROs.

All sequences of N ROs share the same first and/or last RO. Such ROs are indicated only once, and only ROs other than such common ROs are indicated via the indicator of each sequence.

The sequence of ROs selected for transmission of the Msg1 with repetitions by different UEs may partially overlap. In this way, the number of resources the network reserves for the Msg1 repetition feature may be minimized. For example, if two sequences of 4 ROs (for 4 repetitions), share 3 ROs out of 4, the total number of resources dedicated to the two sequences is 5 ROs instead of the 8 ROs that would be needed if the two sequences would not overlap in any of the ROs. However, in order for a network to be able to benefit from this scheme and eventually distinguish two UEs using two different but partly overlapping RO sequences for Msg1 repetition, enhancements to the current RA-RNTI framework are necessary. To achieve this, the inventors of present disclosure have defined generation of the RA-RNTI based on the RO sequence instead of per RO. This way, even if the UEs use partly overlapped RO sequences for Msg1 repetitions, the UEs can be uniquely identified and addressed in subsequent Msg2.

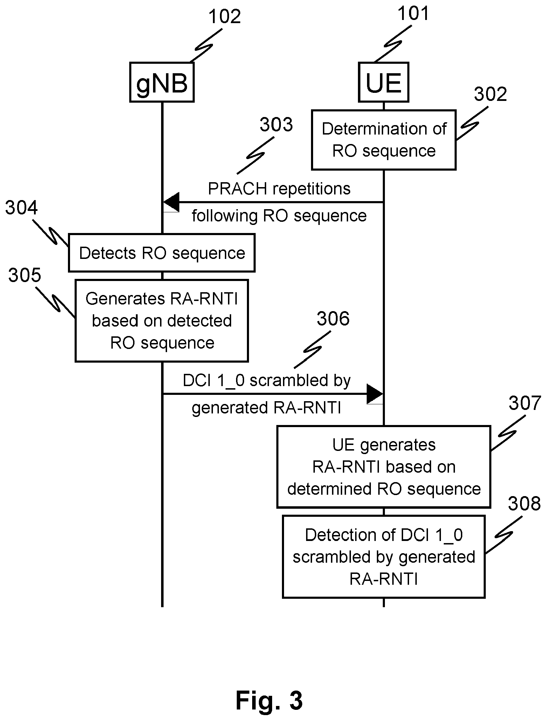

Fig. 3 shows a process of an example embodiment. Fig. 3 shows signaling between the UE 101 and gNB 102 and steps performed in the UE and in the gNB, respectively. It is to be noted that performing all phases shown in Fig. 3 is not necessarily mandatory for achieving the desired technical effects of present disclosure. The process of Fig. 3 comprises the following:

302: The UE determines which RO sequence to use for transmission of the Msg1 with repetitions. The possible RO sequences may be partially overlapping or not overlapping. The UE may for example randomly select one of possible RO sequences. By randomly selecting the RO sequence, collision probability with other UEs is likely reduced. The determination of the RO sequence may be performed based on a repetition configuration provided by the gNB and the UE may select one of the configured candidate RO sequences. Various alternatives of determining the RO sequence have been discussed earlier in this document.

303: The determined RO sequence is then used for transmission of the Msg1 with repetitions.

304: The gNB detects transmission of the Msg1 with repetitions over the RO sequence. gNB may perform detection of all or part of the configured sequences and detect energy in the sequence chosen by the UE for transmission of Msg1 with repetitions. In this way gNB is able to understand the sequence used by the UE for transmission of Msg1 with repetitions.

305: The gNB generates RA-RNTI based on the detected RO sequence. Details of various alternatives of generating the RA-RNTI based on the detected RO sequence are discussed later in this document.

The RA-RNTI generated in step 305 is then used by the gNB in one or more following phases of the random access procedure.

306: The gNB transmits to the UE a DCI with CRC scrambled by the RA-RNTI generated in step 305. This schedules the PDSCH carrying the Msg2. In this way the generated RA-RNTI is used in connection with transmission of the Msg2.

307: The UE generates RA-RNTI based on the RO sequence the UE determined in step 302. The UE uses the same algorithm the gNB used in step 305. In this way the UE and the gNB generate the same RA-RNTI.

The RA-RNTI generated in step 307 is then used by the UE in one or more following phases of the random access procedure.

308: The UE receives the DCI with CRC scrambled by the RA-RNTI and determines whether the received RA-RNTI matches with the RA-RNTI generated by the UE in step 307. If the two RA-RNTI match, the UE proceeds with decoding the corresponding scheduled Msg2. That is, the received RA-RNTI and the generated RA-RNTI are compared for the purpose of deciding on processing the Msg2 of the random access procedure.

The UE may monitor the DCI in one or multiple time windows that start from one or more of the ROs belonging to the sequence the UE is using for the transmission of the Msg1 with repetitions. In one embodiment, the UE starts monitoring the DCI starting from an OFDM symbol following the last symbol of the last RO of the RO sequence used to transmit Msg1 with repetitions. In another embodiment, the UE starts monitoring the DCI starting from an OFDM symbol following the last symbol of each RO of the RO sequence used to transmit Msg1 with repetitions.

It is to be noted that depending on practical implementation some details discussed in connection with Fig. 3 may vary from the herein disclosed details.

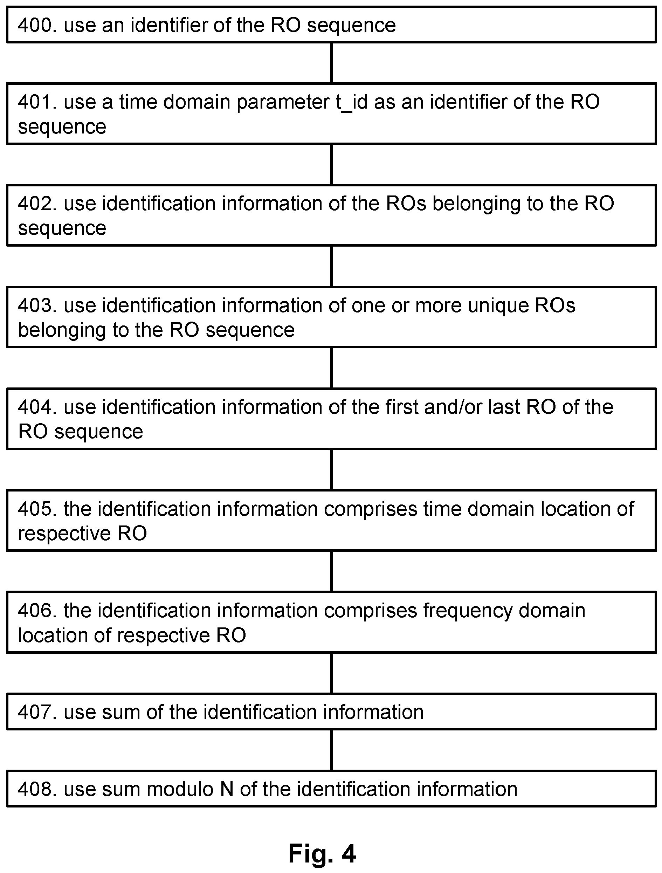

Fig. 4 lists alternatives of some example embodiments. There are listed different alternatives that may be used in generation of the RA-RNTI based on the RO sequence. Some of the listed alternatives may be combined or used in parallel. The equation 1 discussed earlier in this document may be used in generation of the RA-RNTI, but the parameters used in the equation 1 may differ. For example, the parameters t_id and/or f_id may differ from the previous definition.

Alternative 400: The generation of the RA-RNTI uses an identifier of the RO sequence.

Alternative 401: The generation of the RA-RNTI uses a time domain parameter t_id as an identifier of the RO sequence. That is, t_id is the identifier of the RO sequence instead of using the time domain parameter t_id as a time domain location of an RO.

In an example embodiment, t_id value is implicitly assigned starting from 0 and following the order of the configured RO sequences for transmission of Msg1 with repetitions.

In another example embodiment, t_id value is implicitly assigned starting from a higher-layer configured value and following the order of the configured RO sequences for transmission of Msg1 with repetitions.

In yet another example embodiment, t_id value is explicitly assigned via higher-layer configuration, wherein one t_id value is assigned to each configured RO sequence for transmission of Msg1 with repetitions.

As defined earlier in this document in connection with Equation 1, t_id can assume 80 values, from 0 to 79. This means that up to 80 RO sequences can be indicated by using t_id in this way.

In an example, and considering the sequences of Fig. 2, t_id = 0 represents the RO sequence [RO#1 RO#6 RO#11 RO#13], t_id = 1 represents the RO sequence [RO#1 RO#6 RO#8 RO#13], and t_id = 2 represents the sequence [RO#1 RO#4 RO#8 RO#13]. The RA-RNTI value is finally generated using the equation 1 by assuming f_id as fixed and associated, e.g., with the first RO. It is worth noticing that f_id could also be the frequency domain location of any other RO belonging to the RO sequence.

Alternative 402: The generation of the RA-RNTI uses identification information of the ROs belonging to the RO sequence. Identification information of all ROs of the RO sequence may be used, but this is not mandatory and identification information of part of the ROs of the RO sequence may suffice.

Alternative 403: The generation of the RA-RNTI uses identification information of one or more unique ROs belonging to the RO sequence. Unique RO herein refers to an RO that belongs only to one RO sequence, i.e. the RO does not belong to any other RO sequence.

In case only one RO of the chosen RO sequence does not belong to any other sequence, this unique RO may be chosen for generation of the RA-RNTI.

In case multiple ROs of the chosen RO sequence do not belong to any other sequence, one of these unique ROs may be chosen for generating the RA-RNTI for example according to one of the following principles: one of the unique ROs is selected in a round robin fashion, the unique RO with lowest number/index is selected, or the unique RO with highest number/index is selected. It is to be noted that alternatively, identification information of all unique ROs may be used.

In an example related to the alternative 403, and considering the first RO sequence [RO#1 RO#6 RO#11 RO#13] of Fig. 2, the RA-RNTI value is generated by considering t_id and f_id of the third RO in the selected RO sequence (RO#11), which is the only RO of the sequence that is not shared with other sequences.

Alternative 404: The generation of the RA-RNTI uses identification information of the first RO of the RO sequence, or identification information of the last RO of the RO sequence, or both of these.

Alternative 405: The identification information comprises time domain identifier of respective RO. The time domain identifier may be time domain location.

Alternative 406: The identification information comprises frequency domain identifier of respective RO. The frequency domain identifier may be frequency domain location.

Alternative 407: The generation of the RA-RNTI uses sum of the identification information. That is, e.g. the time domain identifiers of the ROs are summed and the sum is used in generation of the RA-RNTI. Additionally or alternatively, the frequency domain identifiers of the ROs may be summed and the sum may be used in generation of the RA-RNTI.

Alternative 408: The generation of the RA-RNTI uses sum modulo N of the identification information. E.g. sum modulo 80 may be used. This may suit well for combining time domain identifiers of the ROs. Additionally or alternatively, sum modulo 8 may be used. This may suit well for combining frequency domain identifiers of the ROs.

It is to be noted that in addition to or as a variant of the alternatives 407-408, also some other aggregation mechanism may be used for combining the identification information of multiple ROs.

In an example related at least to some aspects of the alternatives 402-408, the RA-RNTI value is generated based on a function of sum of time domain identifiers and a function of sum of frequency domain identifiers of the ROs. The time domain identifiers are summed with time domain identifiers and frequency domain identifiers are summed with frequency domain identifiers e.g. in order to obtain t_id and f_id values for the Equation 1.

In another example related at least to some aspects of the alternatives 402-409, the RA-RNTI value is generated based on a function of sum of time domain identifiers of the different ROs of the RO sequence and based on a frequency domain identifier of one of the ROs of the RO sequence.

In yet another example related at least to some aspects of the alternatives 402-408, the RA-RNTI value is generated based on a time domain identifier of one of the ROs of the RO sequence and based on a function of sum of frequency domain identifiers of the different ROs of the RO sequence.

The function of sum may be sum, weighted sum or alternatively sum modulo N. For example, sum modulo 8 or sum modulo 80 may be used. In an example embodiment, sum modulo 8 is used for frequency domain identifiers and sum modulo 80 is used for time domain identifiers.

In an example related for example to the alternatives 402, 405, and 408, and considering the first RO sequence [RO#1 RO#6 RO#11 RO#13] of Fig. 2, the RA-RNTI value is generated as follows:

$$\text{RA-RNTI} = 1 + s\_id + 14 \times \text{mod}(t\_id\_tot, 80) + 14 \times 80 \times f\_id + 14 \times 80 \times 8 \times ul\_carrier\_id$$

where t_id_tot = t id_RO#1 + t id_RO#6 + t id_RO#11 + t_id_RO#13, t id_RO#1 is the time domain location of the RO number 1, t_id_RO#6 is the time domain location of the RO number 6, t id_RO#11 is the time domain location of the RO number 11, t id_RO#13 is the time domain location of the RO number 13 and mod() is the modulo operator. The f_id could be the frequency domain location of any RO belonging to the sequence (e.g., RO#1, RO#6, RO#11 or RO#13 in this example).

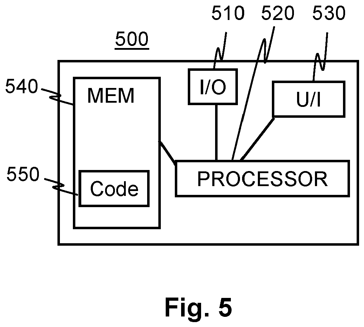

Fig. 5 shows a block diagram of an apparatus 500 according to an example embodiment. The apparatus 500 may operate as a network element, such as the gNB 102 of Fig. 1, or as a UE, such as the UE 101 of Fig. 1. The apparatus 500 generally comprises a memory 540 including a computer program code 550. The apparatus 500 further comprises a processor 520 for controlling the operation of the apparatus 500 using the computer program code 550, and a communication unit 510 for communicating with other nodes. Further, the apparatus 500 may comprise a user interface unit 530.

The communication unit 510 comprises, for example, one or more of: a local area network (LAN) port; a wireless local area network (WLAN) unit; Bluetooth unit; cellular data communication unit; or satellite data communication unit. The communication interface 510 may support one or more different communication technologies. The communication interface 510 may support Ethernet communications and/or IP based communications. The apparatus 500 may also or alternatively comprise more than one of the communication interfaces 510. The processor 520 comprises, for example, any one or more of: a master control unit (MCU); a microprocessor; a digital signal processor (DSP); an application specific integrated circuit (ASIC); a field programmable gate array; and a microcontroller. The user interface unit 530 may comprise a circuitry for receiving input from a user of the apparatus 500, e.g., via a keyboard; graphical user interface of a display; speech recognition circuitry; or an accessory device; such as a headset; and for providing output to the user via, e.g., a graphical user interface or a loudspeaker. Various parts may be implemented using more than one corresponding or different elements, such as memories and storages may be multiplied for capacity and/or redundancy purposes. Similarly, processing and/or communications may be implemented with multiple parallel or elements for capacity and/or redundancy purposes.

The computer program code 550 may control the apparatus 500 to implement one or more example embodiments of present disclosure, such as the processes and details discussed in connection with of Figs. 3-4.

As used in this application, the term "circuitry" may refer to one or more or all of the following:

(a) hardware-only circuit implementations (such as implementations in only analog and/or digital circuitry) and;
(b) combinations of hardware circuits and software, such as (as applicable):

(i) a combination of analog and/or digital hardware circuit(s) with software/firmware; and
(ii) any portions of hardware processor(s) with software (including digital signal processor(s)), software, and memory(ies) that work together to cause an apparatus, such as a mobile phone or server, to perform various functions); and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Without in any way limiting the scope, interpretation, or application of the claims appearing below, a technical effect of one or more of the example embodiments disclosed herein is improved random access procedure. Another technical effect of one or more of the example embodiments disclosed herein is providing details of random access procedure suited for 5G NR. More specifically, various embodiments provide improvements for generation of RA-RNTI of the random access procedure.

Yet another technical effect of one or more of the example embodiments disclosed herein is that they may reduce the collision probability in random access procedure. Further, even if the UEs use partly overlapping RO sequences for Msg1 repetitions, various embodiments of present disclosure provide that UEs can be uniquely identified and addressed in subsequent Msg2 of the random access procedure. Yet another technical effect of one or more of the example embodiments disclosed herein is that practical usability of the Msg1 repetition feature may be increased.

Embodiments of the present disclosure may be implemented in software, hardware, application logic or a combination of software, hardware, and application logic. The software, application logic and/or hardware may reside e.g. on the gNB 102 or on the UE 101. In an example embodiment, the application logic, software, or an instruction set is maintained on any one of various conventional computer-readable media. In the context of this document, a "computer-readable medium" may be any non-transitory media or means that can contain, store, communicate, propagate, or transport the instructions for use by or in connection with an instruction execution system, apparatus, or device, such as a computer, with one example of a computer described and depicted in Fig. 5. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined.

Although various aspects of present disclosure are set out in the independent claims, other aspects may comprise other combinations of features from the described embodiments and/or the dependent claims with the features of the independent claims, and not solely the combinations explicitly set out in the claims.

It is also noted herein that while the foregoing describes example embodiments, these descriptions should not be viewed in a limiting sense. Rather, there are several variations and modifications which may be made without departing from the scope of the present disclosure as defined in the appended claims.

## LIST OF ABBREVIATIONS

UE: User Equipment
gNB: NR Node B
Msg1: Message 1
PRACH: Physical Random Access Channel
RACH: Random Access Channel
RO: RACH Occasion
FDM: Frequency Domain Multiplexing
SS/PBCH: Synchronization Signal/Physical Broadcast Channel
SSB: Synchronization Signal Block
FR1: Frequency Range 1
FR2: Frequency Range 2
SIB1: System Information Block 1
TDD: Time Division Duplexing
FDD: Frequency Division Duplexing
OFDM: Orthogonal Frequency Division Multiplexing
CE: Coverage Enhanced
RA-RNTI: Random Access - Radio Network Temporary Identifier
DCI: Downlink Control Information
NW: Network

RAPID: Random Access Preamble ID
PDCCH: Physical Downlink Control Channel
CRC: Cyclic Redundancy Check
RAR: Random Access Response

**Claims**

1. An apparatus comprising:

   means for determining an RO sequence for transmission of a first message with repetitions, wherein the first message is part of a random access procedure;
   means for transmitting the first message with repetitions over the determined RO sequence;
   means for generating RA-RNTI based on the determined RO sequence; and
   means for using the generated RA-RNTI in the random access procedure.

2. The apparatus of claim 1, wherein using the generated RA-RNTI comprises detecting downlink control information with cyclic redundancy check scrambled by the generated RA-RNTI.

3. An apparatus comprising:

   means for detecting transmission of a first message with repetitions over an RO sequence, wherein the first message is part of a random access procedure;
   means for generating RA-RNTI based on the detected RO sequence; and
   means for using the generated RA-RNTI in the random access procedure.

4. The apparatus of claim 3, wherein using the generated RA-RNTI comprises scrambling a cyclic redundancy check of downlink control information by the generated RA-RNTI; and transmitting the downlink control information.

5. The apparatus of any preceding claim, wherein the generation of the RA-RNTI is configured to use an identifier of the RO sequence.

6. The apparatus of claim 5, wherein the generation of the RA-RNTI is configured to use a time domain parameter t_id as an identifier of the RO sequence.

7. The apparatus of any one of claims 1-4, wherein the generation of the RA-RNTI is configured to use identification information of the ROs belonging to the RO sequence.

8. The apparatus of any one of claims 1-4, wherein the generation of the RA-RNTI is configured to use identification information of one or more unique ROs belonging to the RO sequence.

9. The apparatus of any one of claims 1-4, wherein the generation of the RA-RNTI is configured to use identification information of at least one of the following: the first RO of the RO sequence and the last RO of the RO sequence.

10. The apparatus of any one of claims 7-9, wherein the identification information comprises time domain identifier of respective RO.

11. The apparatus of any one of claims 7-10, wherein the identification information comprises frequency domain identifier of respective RO.

12. The apparatus of any one of claims 7-11, wherein the generation of the RA-RNTI is configured to use sum of the identification information.

13. The apparatus of any one of claims 7-11, wherein the generation of the RA-RNTI is configured to use sum modulo N of the identification information.

14. A method comprising:

determining an RO sequence for transmission of a first message with repetitions, wherein the first message is part of a random access procedure;
transmitting the first message with repetitions over the determined RO sequence;
generating RA-RNTI based on the determined RO sequence; and
using the generated RA-RNTI in the random access procedure.

15. A method comprising:

detecting transmission of a first message with repetitions over an RO sequence, wherein the first message is part of a random access procedure;
generating RA-RNTI based on the detected RO sequence; and
using the generated RA-RNTI in the random access procedure.

Fig. 1

Fig. 2

102

gNB

101

UE

302

Determination of
RO sequence

303

PRACH repetitions
following RO sequence

304

Detects RO sequence

305

Generates RA-RNTI
based on detected
RO sequence

306

DCI 1_0 scrambled by
generated RA-RNTI

307

UE generates
RA-RNTI based on
determined RO sequence

308

Detection of DCI 1_0
scrambled by generated
RA-RNTI

# Fig. 3

400. use an identifier of the RO sequence

401. use a time domain parameter t_id as an identifier of the RO sequence

402. use identification information of the ROs belonging to the RO sequence

403. use identification information of one or more unique ROs belonging to the RO sequence

404. use identification information of the first and/or last RO of the RO sequence

405. the identification information comprises time domain location of respective RO

406. the identification information comprises frequency domain location of respective RO

407. use sum of the identification information

408. use sum modulo N of the identification information

## Fig. 4

**Fig. 5**

Europäisches
Patentamt

European
Patent Office

Office européen
des brevets

# EUROPEAN SEARCH REPORT

Application Number

EP 23 19 8113

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 496 499 B1 (SAMSUNG ELECTRONICS CO LTD [KR]) 17 February 2021 (2021-02-17) * paragraph [0054] * * paragraph [0069] * * paragraph [0076] * * paragraph [0196] - paragraph [0197] * ----- | 1-15 | INV. H04L1/08 H04W74/0833 |
| X | EP 2 869 654 A1 (HTC CORP [TW]) 6 May 2015 (2015-05-06) * paragraph [0020] - paragraph [0022] * ----- | 1-15 | |

TECHNICAL FIELDS
SEARCHED      (IPC)

H04W
H04L

The present search report has been drawn up for all claims

| Place of search | Date of completion of the search | Examiner |
|---|---|---|
| The Hague | 30 January 2024 | Lamadie, Sylvain |

EPO FORM 1503 03.82 (P04C01)

## ANNEX TO THE EUROPEAN SEARCH REPORT
## ON EUROPEAN PATENT APPLICATION NO.

EP 23 19 8113

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2024

| Patent document cited in search report | | Publication date | Patent family member(s) | | Publication date |
|---|---|---|---|---|---|
| EP 3496499 | B1 | 17-02-2021 | AU | 2014287910 A1 | 11-02-2016 |
| | | | CN | 105379336 A | 02-03-2016 |
| | | | CN | 110366262 A | 22-10-2019 |
| | | | EP | 3020223 A1 | 18-05-2016 |
| | | | EP | 3496499 A1 | 12-06-2019 |
| | | | JP | 2016528791 A | 15-09-2016 |
| | | | JP | 2019146261 A | 29-08-2019 |
| | | | KR | 20160030252 A | 16-03-2016 |
| | | | US | 2015016312 A1 | 15-01-2015 |
| | | | WO | 2015005701 A1 | 15-01-2015 |
| EP 2869654 | A1 | 06-05-2015 | CN | 104602359 A | 06-05-2015 |
| | | | EP | 2869654 A1 | 06-05-2015 |
| | | | US | 2015117374 A1 | 30-04-2015 |

EPO FORM P0459

For more details about this annex : see Official Journal of the European Patent Office, No. 12/82